# EUROPÄISCHE PATENTANMELDUNG

(11) **EP 0 978 680 A2**
(43) Veröffentlichungstag der Anmeldung: **09.02.2000**
(21) Anmeldenummer: 99114001.3
(22) Anmeldetag: 19.07.1999
(51) Int. Cl.: F16L 41/08

(54) **Hochdruckverbindungssystem**

(30) Priorität: 04.08.1998 CH 163498
(71) Anmelder: SIG Schweizerische Industrie-Gesellschaft, 8212 Neuhausen am Rheinfall (CH)
(72) Erfinder: Spinnler, Fritz W., 5507 Mellingen (CH)
(74) Vertreter: Patentanwälte Schaad, Balass, Menzl & Partner AG

(57) **Zusammenfassung**

Es wird ein Hochdruckverbindungssystem mit einem einen ersten Fluidkanal (2) umfassenden ersten Körper (1) und einem einen zweiten Fluidkanal (5) umfassenden zweiten Körper (3) beschrieben. Der erste Körper ist von dem zweiten Körper zumindest teilweise umgriffen und in der Wand des ersten Körpers (1) sind ein erster und in der Wand des ersten Körpers ein zweiter Verbindungskanal (10,6) zum Verbinden des ersten Fluidkanals mit dem zweiten Fluidkanal ausgebildet. Der erste Körper ist von dem zweiten Körper unter Presspassung umgriffen, während die Verbindungskanäle (10,6) als jeweils zur Aussenseite (11,7) des ersten bzw. des zweiten Körpers verlaufende Stichkanäle ausgebildet sind, die direkt miteinander verbunden sind. Der erste und/oder der zweite Körper weist im Bereich einer an der Aussenseite des ersten bzw. des zweiten Körpers gebildeten Austrittsöffnung des ersten bzw. des zweiten Fluidkanals Mittel zum Erhöhen des durch die Presspassung zwischen dem ersten und dem zweiten Körper erzeugten Anpressdrucks auf.

## Beschreibung

Die vorliegende Erfindung betrifft ein Hochdruckverbindungssystem mit einem einen ersten Fluidkanal umfassenden ersten Körper und einem einen zweiten Fluidkanal umfassenden zweiten Körper, wobei der erste Körper von dem zweiten Körper zumindest teilweise umgriffen ist und in der Wand des ersten Körpers ein erster und in der Wand des zweiten Körpers ein zweiter Verbindungskanal zum Verbinden des ersten Fluidkanals mit dem zweiten Fluidkanal ausgebildet sind. Weiterhin ist die Erfindung auf eine Hochdruckförderpumpe mit einem erfindungsgemässen Hochdruckverbindungssystem gerichtet.

Hochdruckverbindungssysteme der eingangs genannten Art werden beispielsweise verwendet, wenn unter hohem Druck stehendes Fluid aus einem Rohr, einem Zylinder oder dergleichen in einen daran angeschlossenen Hochdruckraum geleitet werden soll. Der den Hochdruckraum umfassende zweite Körper umgreift dabei üblicherweise den ersten Körper, beispielsweise das Rohr oder den Zylinder, wobei durch in den Körperwänden ausgebildete Verbindungskanäle die Überführung des Fluids von dem ersten Körper in den zweiten Körper erfolgt.

Während der erste Verbindungskanal beispielsweise in radialer Richtung von dem ersten Fluidkanal zur Aussenseite des ersten Körpers verläuft, umfasst der zweite Verbindungskanal üblicherweise einen Ringraum, der mit dem zweiten Fluidkanal, d.h. dem Hochdruckraum des zweiten Körpers, verbunden ist. Der Ringraum ist dabei so angeordnet, dass der erste Verbindungskanal in den Ringraum mündet, so dass das aus dem ersten Fluidkanal des ersten Körpers über den ersten Verbindungskanal austretende Fluid zunächst in den Ringraum strömt, diesen vollständig ausfüllt und von dort in den den Hochdruckraum bildenden zweiten Fluidkanal eindringt.

Bei diesen Hochdruckverbindungssystemen, die beispielsweise in der Hydraulik oder in der Pneumatik eingesetzt werden, tritt das Problem auf, dass aufgrund der auftretenden hohen Drücke die Verbindungsstelle zwischen dem ersten und dem zweiten Körper oftmals nicht eine ausreichende Dichtigkeit besitzt. Um diese Probleme zu vermeiden, werden beispielsweise entsprechende Dichtmittel an der Verbindungsstelle vorgesehen, die die erforderliche Dichtigkeit gewährleisten sollen.

Bei extrem hohen Drücken kann allerdings der mittels des Ringkanals den ersten Körper umfassende zweite Körper so hoch belastet werden, dass dieser bleibend deformiert wird, wodurch die Verbindungsstelle undicht wird. Dies kann auch dann der Fall sein, wenn der den ersten Körper umgreifende zweite Körper sehr massiv ausgeführt ist, da der in dem zweiten Körper ausgebildete Ringkanal eine grosse Angriffsfläche für den Fluiddruck bildet. Aufgrund dieser grossen Angriffsfläche kann das unter hohem Druck stehende Fluid diesen Kanal aufblähen und dadurch eine Undichtigkeit der Verbindungsstelle zwischen den beiden Körpern erzeugen.

Es ist eine Aufgabe der Erfindung, ein Hochdruckverbindungssystem der eingangs genannten Art so auszubilden, dass auch bei sehr hohen Drükken die Dichtigkeit zwischen den verbundenen Körpern gewährleistet ist.

Diese Aufgabe wird erfindungsgemäss dadurch gelöst, dass der erste Körper von dem zweiten Körper unter Presspassung umgriffen ist, dass die Verbindungskanäle als jeweils zur Aussenseite des ersten bzw. des zweiten Körpers verlaufende Stichkanäle ausgebildet sind, die direkt miteinander verbunden sind, und dass der erste und/oder der zweite Körper im Bereich einer an der Aussenseite des ersten bzw. des zweiten Körpers gebildeten Austrittsöffnung des ersten bzw. des zweiten Fluidkanals Mittel zum Erhöhen des durch die Presspassung zwischen dem ersten und dem zweiten Körper erzeugten Anpressdrucks aufweist.

Es werden somit erfindungsgemäss unterschiedliche Schritte zur Lösung der angegebenen Aufgabe vorgenommen. Zum einen werden der erste und der zweite Körper so ausgebildet, dass der zweite Körper den ersten Körper unter Presspassung umgreift. Dies kann beispielsweise durch ein Schrumpfverfahren oder durch Einpressen des ersten Körpers in eine entsprechende Öffnung des zweiten Körpers in der Art einer Längs-Presspassung erfolgen. Durch die Presspassung bildet der zweite Körper einen Druckkörper, der auf die Aussenseite des ersten Körpers eine Druckspannung aufbringt. Diese als äussere Vorspannung wirkende Druckspannung auf den ersten Körper entlastet diesen von hohen Spannungen, wenn das Fluid unter extrem hohen Druck durch die beiden Körper gefördert wird.

Der zweite Lösungsgedanke liegt darin, dass auf den üblichen Ringkanal verzichtet wird und die beiden Verbindungskanäle als Stichkanäle ausgebildet sind, die unmittelbar, d.h. ohne Zwischenschaltung eines Ringkanals, miteinander verbunden sind. Auf diese Weise wird die Angriffsfläche für den Fluiddruck innerhalb der Verbindungskanäle wesentlich reduziert, so dass ein Aufblähen der Verbindungskanäle, wie es bei der Verwendung eines Ringkanals erfolgen kann, praktisch ausgeschlossen ist.

Der dritte Lösungsgedanke liegt darin, dass gezielt der Anpressdruck zwischen dem ersten und zweiten Körper, der aufgrund der Presspassung entsteht, im Bereich der Austrittsöffnungen der Verbindungskanäle erhöht wird. Durch diese gezielte Erhöhung des Anpressdruckes an der kritischen Verbindungsstelle zwischen dem ersten und dem zweiten Körper wird die Dichtigkeit eines erfindungsgemäss ausgebildeten Hochdruckverbindungssystems weiter verbessert.

Versuche haben gezeigt, dass mit einem erfindungsgemäss ausgebildeten Hochdruckverbindungssystem auch bei einem Betriebsdruck von über 2000 bar die erforderliche Dichtigkeit gewährleistet ist.

Grundsätzlich ist anzumerken, dass jeder der drei genannten Lösungsgedanken auch für sich allein bereits eine deutliche Verbesserung gegenüber den bekannten Hochdruckverbindungssystemen bewirkt.

Nach einer vorteilhaften Ausführungsform der Erfindung sind die Verbindungskanäle im wesentlichen fluchtend miteinander ausgebildet. Dadurch wird erreicht, dass die Strömung des Fluids von dem ersten Körper in den zweiten Körper ungehindert erfolgen kann, so dass insbesondere Angriffsflächen für das strömende Fluid weitgehend vermieden werden. Dies wird beispielsweise auch dadurch erreicht, dass die Austrittsöffnung des ersten Verbindungskanals unmittelbar an der Austrittsöffnung des zweiten Verbindungskanals anliegt.

Nach einer weiteren bevorzugten Ausführungsform der Erfindung ist der die Austrittsöffnung des ersten und/oder des zweiten Verbindungskanals bildende Bereich der Aussenseite des ersten bzw. des zweiten Körpers gegenüber der sich daran anschliessenden Aussenseite vorspringend ausgebildet. Durch die nach aussen vorspringende Ausbildung der Aussenseite im Bereich der Austrittsöffnung wird nach Erzeugen der Presspassung im Bereich dieser Austrittsöffnung die Druck-Vorspannung erhöht, wodurch die Dichtigkeit der Verbindungsstelle ebenfalls verbessert wird. Dabei kann sich an den vorspringenden Bereich ein gegenüber der sich wiederum daran anschliessenden Aussenseite zurückgesetzter Bereich anschliessen, der die Austrittsöffnung insbesondere vollständig umgibt.

Mit einer vorteilhaften, mit geringen Herstellungskosten verbundenen Ausbildung ist dabei der die Austrittsöffnung des ersten und/oder des zweiten Verbindungskanals bildende Bereich als im wesentlichen zylinderförmige Auskragung mit einer stirnseitigen, im wesentlichen ringförmigen Kontaktfläche ausgebildet. Diese Kontaktfläche kann insbesondere wesentlich kleiner als die Fläche des restlichen durch die Pressspannung gebildeten Kontaktbereichs zwischen dem ersten und dem zweiten Körper sein.

Durch die Bildung eines zurückgesetzten Bereichs wird erreicht, dass unmittelbar im Bereich der Austrittsöffnungen der Verbindungskanäle, d.h. im Bereich der kritischen Verbindungsstelle zwischen den beiden Körpern, die Kontaktfläche verkleinert und dadurch der an dieser Kontaktfläche entstehende Anpressdruck gegenüber dem auf den restlichen Kontaktbereich wirkenden Anpressdruck vergrössert wird.

Weitere vorteilhafte Ausführungsformen der Erfindung sind in den Unteransprüchen angegeben. Besonders vorteilhaft kann das erfindungsgemässe Hochdruckverbindungssystem bei Hochdruckförderpumpen verwendet werden, wie sie beispielsweise in der CH-Patentanmeldung Nr. 1997 1275/97 und in der entsprechenden EP-Patentanmeldung Nr. 98 108 103.7 offenbart sind.

Nachfolgend wird die Erfindung anhand eines Ausführungsbeispiels unter Bezugnahme auf die Zeichnungen näher beschrieben; in diesen zeigen:
- Figur 1: einen Längsschnitt durch ein erfindungsgemäss ausgebildetes Hochdruckverbindungssystem;
- Figur 2: einen Querschnitt durch das Hochdruckverbindungssystem nach Figur 1; und
- Figur 3: eine schematische Perspektivdarstellung eines Teils des Hochdruckverbindungssystems gemäss den Figuren 1 und 2.

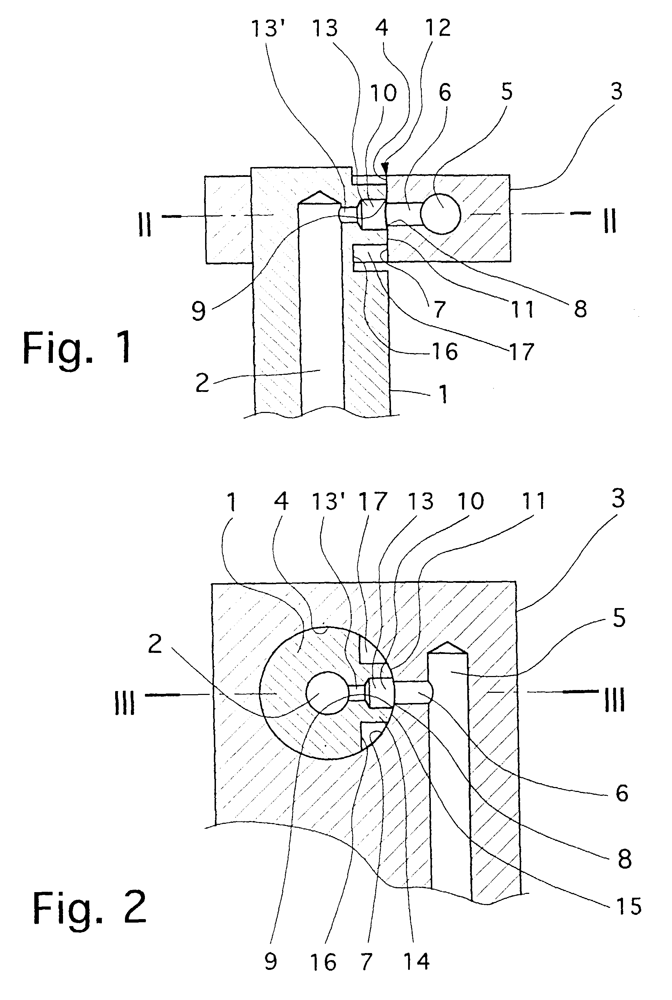

Figur 1, die einen Schnitt entlang der Linie III-III aus Figur 2 darstellt, zeigt einen rohrförmigen ersten Körper 1 mit einem sich axial darin erstreckenden ersten Fluidkanal 2.

Der erste Körper 1 ist in seinem oberen Endbereich von einem zweiten Körper 3 umfasst. Dazu besitzt der zweite Körper 3 eine konzentrisch ausgebildete Durchbrechung 4, in die das obere Ende des ersten Körpers 1 eingesetzt ist. Die lichte Weite der Durchbrechung 4 ist dabei etwas kleiner als der Aussendurchmesser des oberen Endbereichs des ersten Körpers 1, so dass dieser in der Durchbrechung 4 im Pressitz angeordnet ist.

Innerhalb des zweiten Körpers 3 ist ein senkrecht zu dem ersten Fluidkanal 2 verlaufender zweiter Fluidkanal 5 ausgebildet, der über einen als Stichkanal ausgebildeten zweiten Verbindungskanal 6 mit der Aussenseite 7 des zweiten Körpers 3 verbunden ist und dort innerhalb der Durchbrechung 4 in einer Austrittsöffnung 8 mündet. Der Begriff "Aussenseite" wird in der vorliegenden Anmeldung auch für die die Durchbrechung 4 des Körpers 3 begrenzenden Flächen verwendet, da unter "Innenseite" die innerhalb des Körpers 3 liegenden Begrenzungsflächen des Verbindungskanals 6 sowie des Fluidkanals 5 verstanden werden.

Unmittelbar an die Austrittsöffnung 8 schliesst sich eine Austrittsöffnung 9 eines als Stichkanal ausgebildeten ersten Verbindungskanals 10 an, der wenigstens annähernd fluchtend mit dem zweiten Verbindungskanal 6 verläuft und den ersten Fluidkanal 2 mit der Aussenseite des ersten Körpers 1 verbindet. Dabei erstreckt sich der erste Verbindungskanal 10 ausgehend von dem ersten Fluidkanal 2 wenigstens annähernd senkrecht zu diesem radial nach aussen.

Der erste Fluidkanal 2 besteht aus zwei Kanalabschnitten 13, 13', wobei der aussenliegende Kanalabschnitt 13 eine grössere Querschnittsfläche als der innenliegende Kanalabschnitt 13' besitzt. Weiterhin besitzt der äussere Kanalabschnitt 13 auch eine grössere Querschnittsfläche als der zweite Verbindungskanal 6. Dadurch kann im Kanalabschnitt 13 beispielsweise ein Rückschlagventil angeordnet werden.

Durch die aneinander anliegenden Aussenseiten 11, 7 der Körper 1, 3 sowie die aneinander angrenzenden Austrittsöffnungen 8, 9 wird eine Verbindungsstelle 12 definiert, die auch bei hohen Drücken die erforderliche Dichtigkeit aufweisen muss.

Um diese Dichtigkeit zu gewährleisten, ist der die Austrittsöffnung 9 sowie den ersten Verbindungskanal 10 bildende Bereich des Körpers 1 als vorspringende, zylinderförmige Auskragung 14 ausgebildet, deren freies Ende eine ringförmige Kontaktfläche 15 bildet.

An die Kontaktfläche 15 der Auskragung 14 schliesst sich ein zurückgesetzter Bereich 16 der Aussenseite 11 des Körpers 1 an, der als Aussparung 17 ausgebildet ist.

Aus der in Figur 2 dargestellten Schnittdarstellung entlang der Linie II-II nach Figur 1 ist die konzentrische Ausbildung des ersten Körpers 1 sowie des ersten Fluidkanals 2 zu erkennen.

Weiterhin ist zu erkennen, dass der zweite Körper 3 den ersten Körper 1 in Presspassung vollständig umgreift, wobei lediglich durch die Aussparung 17 der vollflächige Kontaktbereich zwischen dem ersten Körper 1 und dem zweiten Körper 3 unterbrochen wird.

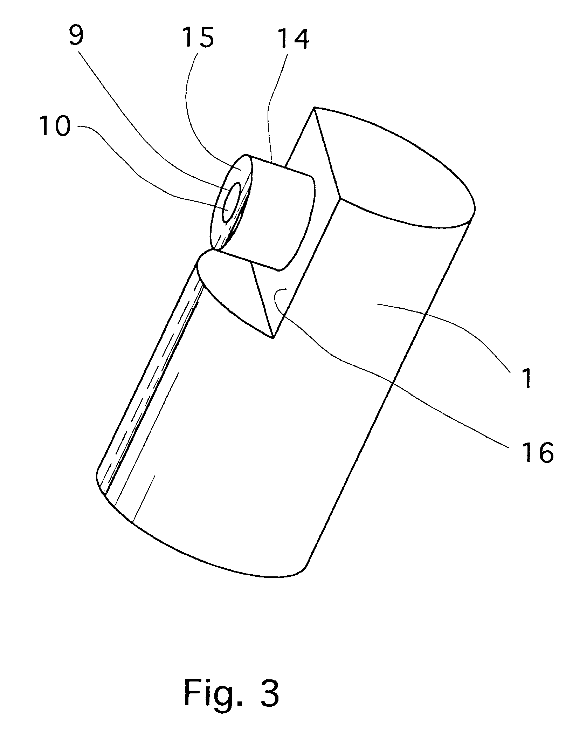

Aus der in Figur 3 dargestellten perspektivischen Darstellung des Körpers 1 ist deutlich die zylinderförmige Auskragung 14 mit der den ersten Verbindungskanal 10 sowie die Austrittsöffnung 9 umfassenden ringförmigen Kontaktfläche 15 zu erkennen.

Weiterhin ist zu erkennen, dass die Auskragung 14 beispielsweise durch Ausfräsen des zurückgesetzten Bereiches 16 erzeugt werden kann.

Da die Kontaktfläche 15 gegenüber der restlichen Aussenfläche des ersten Körpers 1 sehr klein ausgebildet ist, entsteht bei Einsetzen des ersten Körpers 1 in die Durchbrechung 4 des zweiten Körpers 3 im Pressitz an der Kontaktfläche 15 ein erhöhter Anpressdruck. Dadurch wird an dieser, die Verbindungsstelle 12 bildenden Stelle die Dichtigkeit zwischen dem ersten und dem zweiten Körper 1, 3 erhöht.

Während bei dem gezeigten Ausführungsbeispiel die Kontaktfläche 15 mit einer gedachten Aussenfläche eines vollflächigen ersten Körpers 1 zusammenfällt, ist es gemäss der Erfindung auch möglich, die Kontaktfläche 15 über die restliche Aussenseite des Körpers 1 hinausstehen zu lassen. In diesem Fall kann der zurückgesetzte Bereich 16 auch entfallen.

## Patentansprüche

1. Hochdruckverbindungssystem mit einem einen ersten Fluidkanal (2) umfassenden ersten Körper (1) und einem einen zweiten Fluidkanal (5) umfassenden zweiten Körper (3), wobei der erste Körper (1) von dem zweiten Körper (3) zumindest teilweise umgriffen ist und in der Wand des ersten Körpers (1) ein erster und in der Wand des zweiten Körpers (3) ein zweiter Verbindungskanal (10, 6) zum Verbinden des ersten Fluidkanals (2) mit dem zweiten Fluidkanal (5) ausgebildet sind,
**dadurch gekennzeichnet,**
dass der erste Körper (1) von dem zweiten Körper (3) unter Presspassung umgriffen ist, dass die Verbindungskanäle (10, 6) als jeweils zur Aussenseite (11, 7) des ersten bzw. des zweiten Körpers (1, 3) verlaufende Stichkanäle ausgebildet sind, die direkt miteinander verbunden sind, und dass der erste und/oder der zweite Körper (1, 3) im Bereich einer an der Aussenseite (11, 7) des ersten bzw. des zweiten Körpers (1, 3) gebildeten Austrittsöffnung (9, 8) des ersten bzw. des zweiten Fluidkanals (2, 5) Mittel (14, 15) zum Erhöhen des durch die Presspassung zwischen dem ersten und dem zweiten Körper (1, 3) erzeugten Anpressdrucks aufweist.

2. Hochdruckverbindungssystem nach Anspruch 1,
**dadurch gekennzeichnet,**
dass die Verbindungskanäle (10, 6) im wesentlichen fluchtend miteinander ausgebildet sind.

3. Hochdruckverbindungssystem nach Anspruch 1 oder 2,
**dadurch gekennzeichnet,**
dass die Austrittsöffnung (9) des ersten Verbindungskanals (10) unmittelbar an der Austrittsöffnung (8) des zweiten Verbindungskanals (6) anliegt.

4. Hochdruckverbindungssystem nach einem der vorhergehenden Ansprüche,
**dadurch gekennzeichnet,**
dass der die Austrittsöffnung (9, 8) des ersten und/oder des zweiten Verbindungskanals (10, 6) bildende Bereich der Aussenseite (11, 7) des ersten bzw. des zweiten Körpers (1, 3) gegenüber der sich daran anschliessenden Aussenseite (16) vorspringend ausgebildet ist.

5. Hochdruckverbindungssystem nach Anspruch 4,
**dadurch gekennzeichnet,**
dass sich an den vorspringenden Bereich (14,15) ein gegenüber der restlichen Aussenseite zurückgesetzter Bereich (16) anschliesst, der die Austrittsöffnung (9) insbesondere vollständig umgibt.

6. Hochdruckverbindungssystem nach Anspruch 4 oder 5,
**dadurch gekennzeichnet,**
dass der die Austrittsöffnung (9, 8) des ersten und/oder des zweiten Verbindungskanals (10, 6) bildende vorspringende Bereich als im wesentlichen zylinderförmige Auskragung (14) mit einer stirnseitigen, im wesentlichen ringförmigen Kontaktfläche (15) ausgebildet ist.

7. Hochdruckverbindungssystem nach Anspruch 6,
**dadurch gekennzeichnet,**
dass die Kontaktfläche (15) wesentlich kleiner als die Fläche des restlichen durch die Presspassung gebildeten Kontaktbereichs zwischen dem ersten und dem zweiten Körper (1, 3) ist.

8. Hochdruckverbindungssystem nach einem der vorhergehenden Ansprüche,
**dadurch gekennzeichnet,**
dass der erste Verbindungskanal (10) im wesentlichen senkrecht zu dem ersten Fluidkanal (2) und/oder dass der zweite Verbindungskanal (6) im wesentlichen senkrecht zu dem zweiten Fluidkanal (5) verläuft.

9. Hochdruckverbindungssystem nach einem der vorhergehenden Ansprüche,
**dadurch gekennzeichnet,**
dass der erste Körper (1) zumindest bereichsweise im wesentlichen rotationssymmetrisch, insbesondere als im wesentlichen zylindrisches Rohr ausgebildet ist.

10. Hochdruckverbindungssystem nach einem der vorhergehenden Ansprüche,
**dadurch gekennzeichnet,**
dass sich der erste Verbindungskanal (10) im wesentlichen radial von dem ersten Fluidkanal (2) zur Aussenseite (11) des ersten Körpers (1) erstreckt.

11. Hochdruckverbindungssystem nach einem der vorhergehenden Ansprüche,
**dadurch gekennzeichnet,**
dass der Querschnitt eines Verbindungskanals (10, 6) in einem die Austrittsöffnung (8, 9) bestimmenden und unmittelbar an diese anschliessenden Abschnitt vergrössert ist.

12. Hochdruckförderpumpe mit einem einen Förderraum umfassenden Zylinder, einem innerhalb des Förderraums verschiebbaren Kolben, einem mit dem Förderraum verbundenen Hochdruckraum und einem Hochdruckverbindungssystem nach einem der vorhergehenden Ansprüche,
**dadurch gekennzeichnet,**
dass der Zylinder den ersten Körper (1), der Förderraum den ersten Fluidkanal (2) und der Hochdruckraum den innerhalb des zweiten Körpers (3) gelegenen zweite Fluidkanal (5) bildet.
